# EUROPÄISCHE PATENTSCHRIFT

(11) **EP 2 410 861 B1**
(45) Veröffentlichungstag und Bekanntmachung des Hinweises auf die Patenterteilung: **14.11.2012**
(21) Anmeldenummer: 10715680.4
(22) Anmeldetag: 25.03.2010
(51) Int. Cl.: A01N 65/26, A01N 25/02, A01P 17/00

(54) **REPELLIERENDE ZUSAMMENSETZUNG ZUR TOPISCHEN ANWENDUNG AUF LEBEWESEN**
REPELLENT COMPOSITION FOR TOPICAL APPLICATION TO CREATURES
COMPOSITION RÉPULSIVE POUR APPLICATION TOPIQUE SUR DES ÊTRES VIVANTS

(30) Priorität: 27.03.2009 DE 102009014667
(43) Veröffentlichungstag der Anmeldung: 01.02.2012
(73) Patentinhaber: Andresen, Uwe, 25767 Albersdorf (DE)
(72) Erfinder: Andresen, Uwe, 25767 Albersdorf (DE)
(74) Vertreter: Busse & Busse
(86) Internationale Anmeldenummer: PCT/EP2010/001878
(87) Internationale Veröffentlichungsnummer: WO 2010/108680

(56) Entgegenhaltungen:
- WO-A1-91/05561
- WO-A1-2009/016247
- DE-A1-102004 054 143

## Beschreibung

Die Erfindung betrifft eine repellierende Zusammensetzung zur topischen Anwendung auf Lebewesen sowie die Verwendung einer derartigen Zusammensetzung zur Abwehr von Ektoparasiten bei Katzen und/oder Hunden.

Repellierende Zusammensetzungen mit Margosaöl als Wirkstoff sind bekannt. Margosaöl wird im asiatischen Raum seit vielen Jahren zur Abwehr von Insekten (Moskitos) bei Menschen in Form von Seifen, Shampoos und Sprays, wie auch in der Landwirtschaft zur Schädlingsbekämpfung verwendet. Das Margosaöl wird auch als Neemöl bezeichnet. Das Margosaöl weist einen starken Knoblauch- oder Zwiebelgeruch auf, der nach dem Auftragen auf die Haut (topische Anwendung) sehr lange anhält. Der unangenehme Geruch ist für Europäer nicht akzeptabel. Aus diesem Grund lehnen europäische Verbraucher Produkte mit Margosaöl zur topischen Anwendung am Menschen ab. Aber auch Produkte mit Margosaöl zur topischen Anwendung an Haustieren werden aufgrund der körperlichen Nähe zu den Tieren überwiegend nicht akzeptiert.

Zur Vermeidung des unangenehmen Geruchs des Margosaöls nach dem Auftragen werden Präparaten mit Margosaöl oft ätherische Öle zur Geruchsmaskierung beigefügt (siehe z.B. WO91/05561). Diese ätherischen Öle führen jedoch bei empfindlichen Lebenwesen häufig zu unerwünschten Hautirritationen.

Es gibt zahlreiche synthetische oder naturidentische andere repellierende Wirkstoffe. Diese werden jedoch häufig aufgrund von unerwünschten Nebenwirkungen abgelehnt. Es handelt sich dabei meist um Arzneimittel, deren chemische Inhaltsstoffe nicht nur toxisch für Ektoparasiten sind, sondern auch für andere Lebewesen, wie zum Beispiel Permethrin mit oft tödlich verlaufenden Vergiftungen bei Katzen sowie umwelttoxikologisch bedenklichen Auswirkungen auf Gewässer und den darin befindlichen Lebewesen.

Im Handel befindliche Margosaöl-Spot-On Produkte enthalten flüchtige organische Lösungsvermittler. Sie führen zu einer Verstärkung des unangenehmen Geruchs aus ebenfalls flüchtigen Schwefelstoffverbindungen des Margosaöls und enthalten daher nur bis zu 4 % des Wirkstoffs.

Andere Margosaöl Spot-On Produkte enthalten Silikonöle als Lösungsvermittler. Sie werden nicht absorbiert, dadurch verbleibt das Margosaöl auf der Haut, was eine hohe Verdunstungsquote und intensiven Geruch zur Folge hat. Zusätzlich bleiben bei der Verwendung von Silikonölen oft tagelang sicht- und spürbare Fettflecken auf dem Fell zurück.

Der Erfindung liegt die Aufgabe zugrunde, eine repellierende Zusammensetzung zur topischen Anwendung auf Lebewesen bereit zu stellen, bei der die vorgenannten Nachteile, insbesondere die unangenehme Geruchsbelästigung durch das Margosaöl, reduziert sind.

Die Erfindung löst diese Aufgabe durch eine repellierende Zusammensetzung zur topischen Anwendung auf Lebewesen, enthaltend Margosaöl oder dessen Extrakte und wenigstens 20 Gew.-% Isopropylmyristat. Für den Fachmann überraschend, besitzt die erfindungsgemäße Zusammensetzung die erwünschte repellierende Wirkung des Margosaöls ohne den als nachteilig empfundenen, nach der Auftragung langanhaltenden Knoblauch- oder Zwiebelgeruch aufzuweisen. Der unangenehme Geruch verschwindet bereits kurze Zeit nach dem Auftragen. Es ist für den Fachmann sehr unerwartet, dass es nach Eindringen des Margosaöls in die Haut nicht zu einer Aufnahme der geruchsverursachenden Schwefelverbindungen in den Körper und deren Ausscheidung über Atemluft kommt, wie sonst z. B. nach Knoblauchverzehr zu beobachten.

Die Anwendung des Hilfsstoffs DMSO (Dimethylsulfoxid), der ein ausgezeichneter Lösungsvermittler und Resorptionsbeschleuniger in der Haut ist, führt zur systemischen Aufnahme von flüchtigen Schwefelverbindungen und deren Freisetzung über die Atemluft. Bei Isopropylmyristat wäre ein ähnlicher Effekt zu erwarten gewesen, doch überraschenderweise zeigte sich, dass bei der Verwendung von Isopropylmyristat als Lösungsvermittler kein knoblauchartiger Geruch der Atemluft durch die flüchtigen Schwefelverbindungen des Margosaöls festgestellt werden kann. Durch die Bindung an das Transportmedium Isopropylmyristat und dessen mangelnde Verdunstung bei rascher Resorption, die durch die Spreiteigenschaften des Isopropylmyristats begünstigt wird, kommt es wahrscheinlich zu einer schnellen Ablagerung des Margosöls in den tiefen lipophilen Schichten der Epidermis (Oberhaut). Isopropylmyristat führt offensichtlich nicht zum Weitertransport in die ambiphilen Schichten der Haut (Cutis), Unterhaut (Subcutis) und schließlich zur Aufnahme in den Organismus, wobei auch der unangenehme Hautgeruch durch die kurze Verweildauer der Zusammensetzung auf der Haut weitgehend eliminiert wird, der bei den im Markt befindlichen Produkten auf Margosaölbasis als störend angesehen wird. Die Zusammensetzung ist zudem nicht mit Wasser von der Haut entfernbar.

Mit Vorteil beträgt der Anteil der Zusammensetzung an Margosaöl 0,5 bis 80 Gew.-%, bevorzugt 5 bis 25 Gew.% und besonders bevorzugt 9 bis 17 Gew.-%. Der Anteil an Isopropylmyristat beträgt mit Vorteil 20 bis 99,5 Gew.%, bevorzugt 50 bis 80 Gew.% und besonders bevorzugt 60 bis 70 Gew.-%. Isopropylmyristat wird also nicht als Minorkomponente sondern als Hauptbestandteil mit einem hohen Anteil innerhalb der Zusammensetzung eingesetzt. Es hat sich gezeigt, dass gerade die vorgenannten Mengenverhältnisse von Margosaöl zu Isopropylmyristat zu einer gutem Wirksamkeit des Margosaöls bei gleichzeitig sehr schneller Ablagerung des Margosaöls in der Epidermis bedingt durch Isopropylmyristat und der damit verbundenen schnellen Abflachung des unangenehmen Knoblauchgeruchs auf der Hautoberfläche führt .

In einer vorteilhaften Ausgestaltung der Erfindung wird als Margosaöl kaltgepresstes Margosaöl verwendet, dass aus den Kernen der Neembaumfüchte gewonnen wird. Es hat sich gezeigt, dass kaltgepresstes Margosaöl eine besonders starke repellierende Wirkung in der erfindungsgemäßen Zusammensetzung aufweist. Das Margosaöl kann jedoch auch unter Zuhilfenahme chemisch-physikalischer Extraktionsmethoden hergestellt werden.

Margosaöl oder dessen Extrakt sind bei Zimmertemperatur von fester Konsistenz. Daraus hergestellte Zusammensetzungen scheiden bei Temperaturen unter 16 °C Fett ab oder nehmen ganz oder teilweise eine feste Konsistenz an. Diese Temperaturen treten bei Lagerung der Zusammensetzung im Auto, wie in der tierärztlich ambulatorischen Praxis üblich, insbesondere im Winter auf. Der Hilfsstoff Isopropylmyristat verhindert hingegen zusätzlich die Fettabscheidung auch bei den vorgenannten Temperaturen. Die vorliegende Erfindung macht sogar die aus Haltbarkeitsgründen erwünschte Lagerung im Kühlschrank möglich.

Margosaöl enthält als wichtigste Wirkstoffe Azadirachtine sowie Salanin und Melantriol. Unter Extrakten des Margosöls werden im Sinne dieser Erfindung zusätzlich auch diese und andere reine Wirkverbindungen aus dem Margosaöl verstanden.

Je nach Einsatzzweck der repellierenden Zusammensetzung ist der Zusatz weiterer pharmazeutischer und/oder kosmetischer Additive sinnvoll. So können beispielsweise weitere Lösungsvermittler oder Lösungsmittel, ätherische Öle zur Geruchsmaskierung, Wirkungsverstärker lipo- oder ambiphile Substanzen zugesetzt werden, z.B. Alkohole, Troglyceride, Toluole, Alkylglykolether, Glykole, Pyrrolidole und dergleichen.

In einer besonders bevorzugten Ausgestaltung der Erfindung enthält die Zusammensetzung weitere Pflanzenöle, insbesondere Leinöl, Rapsöle, Nachtkerzenöl und/oder Sonnenblumenöl. Die Wirksamkeit der Zusammensetzung unter Vermeidung der nachteiligen Geruchsbeeinträchtigung wird hierdurch weiter erhöht und dabei gleichzeitig die Hautgesundheit und -pflege verbessert.

In einer besonders bevorzugten Ausgestaltung der Erfindung enthält die Zusammensetzung 16 Gew.-% Margosaöl, 64 Gew.-% Isopropylmyristat, 10 Gew.-% Leinöl und 10 Gew.% Rapsöl. Es hat sich gezeigt, dass diese Zusammensetzung eine besonders ausgeprägte repellierende Wirkung besitzt und gleichzeitig der unangenehme Knoblauchgeruch bereits kurze Zeit nach dem Auftragen nicht mehr auftritt. Die Zusammensetzung eignet sich besonders zur Verwendung an Katzen, da diese empfindlicher mit Hautirritationen bei ergänzender Verwendung ätherischer Öle in der Zusammensetzung reagieren.

Insbesondere bei Anwendung der Zusammensetzung bei Hunden enthält die Zusammensetzung bevorzugt zusätzlich ätherische Öle, insbesondere Citronellöl und/oder Lavendelöl. Besonders bevorzugt enthält eine derartige Zusammensetzung 16 Gew.-% Margosaöl, 64 Gew.-% Isopropylmyristat, 10 Gew.-% Citronellöl und 10 Gew.-% Lavendelöl. Diese Zusammensetzung hat sich als besonders wirksam und gleichzeitig geruchsfreundlich ohne störenden Knoblauchgeruch bei Anwendung an Hunden erwiesen. Hunde sind gegenüber ätherischen Ölen oft wenig empfindlich.

Die Lebewesen sind bevorzugt Haus-, Heim- und Zootiere und/oder Menschen. Bei diesen Lebewesen oder deren Besitzern ist die Akzeptanz der Zusammensetzung besonders ausgeprägt.

Ein weiterer Aspekt der Erfindung ist die Verwendung einer der vorgenannten Zusammensetzungen zur Abwehr von Ektoparasiten bei Katzen und/oder Hunden. Diese Tiere reagieren besonders sensibel auf unerwünschte Nebenwirkungen synthetischer oder naturidentischer Wirkstoffe.

### Voruntersuchung an Katzen

In einer tierärztlichen Untersuchung an 20 Katzen wurde die nachfolgend als "Flozek-Katze" bezeichnete Rezeptur zunächst in einer Vorstudie getestet :

| | |
|---|---|
| Margosaöl | 16,0 % |
| Isopropylmyristat | 64,0 % |
| Leinöl | 10,0 % |
| Rapsöl | 10.0 % |
| | 100,0 % |

Die Zusammensetzung "Flozek-Katze" zeigte keinerlei Hautirritationen bei den untersuchten Katzen bei gleichzeitig hoher repellierender Wirkung.

Im Anschluss an die oben genannte Voruntersuchung wurde die erfindungsgemäße Zusammensetzung in einer umfangreichen tierärztlichen Anwendungsstudie näher untersucht. Die Anwendungsstudie umfasste männliche und weibliche Tiere verschiedener Rassen und Mischlinge bei den Hunden und bei den Katzen ausschließlich Mischlinge. Die Tier wiesen unterschiedliche Körpergewichte auf. Das Alter der Tiere schwankte zwischen 6 Monaten und 14 Jahren. Den Katzen und kleinen Hunden wurde das Produkt nach Teilen der Haare im Schulter-Nackenbereich auf die Haut (topisch) appliziert, bei großen Hunden in der Schulter- Nacken - und Schwanzwurzelgegend. Die Untersuchung umfasste 111 ausgewertete Katzen und Hunde. Die Befundermittlung wurde innerhalb eines Zeitraums von einer bis vier Wochen nach der Behandlung durchgeführt.

### Versuche an Katzen

Die Katzen wurden mit der oben bereits beschriebenen Rezeptur "Flozek-Katze" behandelt. Die Ergebnisse der Untersuchungen sind in der nachfolgenden Tabelle zusammengefasst.

**Tabelle 1a**

| **Dosis "Flozek-Katze" 1 ml** | | | | | | |
|---|---|---|---|---|---|---|
| **No Katze** | **KGW** | **Geschlecht** | **Allgem. Reaktion** | **Lokale Reaktion** | **Geruch** | **Bemerkung** |
| 1 | groß | W | - | - | +-- | Fell glänzt |
| 2 | " | W | - | - | +-- | Fettfleck |
| 3 | " | W | - | - | +-- | --- |
| 4 | " | W | - | - | --- | --- |
| 5 | " | W | - | - | --- | Fell glänzt |
| 6 | " | W | - | - | ++- | Fettfleck |
| 7 | " | W | - | - | +-- | --- |
| 8 | " | W | - | - | +-- | --- |
| 9 | " | W | - | - | +-- | --- |
| 10 | " | W | - | - | --- | --- |
| 11 | " | W | - | - | +-- | Fell glänzt |
| 12 | " | W | - | - | +-- | --- |
| 13 | klein | M | - | - | ++--- | Fell glänzt |
| 14 | " | W | - | - | +-- | " |
| 15 | " | M | - | - | +-- | " |
| 16 | " | M | - | - | ++- | Fettfleck |
| 17 | " | W | - | - | +-- | --- |
| 18 | " | W | - | - | +-- | --- |
| 19 | " | W | - | - | +-- | --- |
| 20 | groß | M | - | - | --- | --- |
| 21 | " | W | - | - | +-- | --- |
| 22 | " | W | - | - | +-- | Fell glänzt |
| 23 | " | W | - | - | --- | " |
| 24 | " | W | - | - | --- | Fettfleck |
| 25 | " | W | - | - | ++- | --- |
| 26 | " | W | - | - | --- | --- |
| 27 | klein | M | - | - | -- | Fell glänzt |
| 28 | " | W | - | - | --- | Fettfleck |
| 29 | " | M | - | - | +-- | --- |
| 30 | " | W | - | - | +-- | Fell glänzt |
| 31 | " | W | - | - | +-- | --- |
| 32 | " | W | - | - | +-- | Fettfleck |
| 33 | groß | M | | - | +-- | --- |
| 34 | " | W | | - | --- | --- |
| 35 | " | W | | - | --- | --- |
| 36 | " | W | | - | --- | --- |
| 37 | " | W | | - | --- | Fell glänzt |
| 38 | klein | M | --- | --- | +-- | Fell glänzt |
| 39 | " | M | --- | --- | +-- | Fell glänzt |
| 40 | " | W | --- | --- | ++- | Fell glänzt |
| 41 | " | W | --- | --- | ++- | --- |
| 42 | " | W | --- | --- | +-- | Fettfleck |
| 43 | " | W | --- | --- | +-- | Fettfleck |
| 44 | groß | W | --- | --- | ++- | Fell glänzt |
| 45 | " | W | --- | --- | --- | --- |
| 46 | " | W | --- | --- | --- | --- |
| 47 | " | W | --- | --- | +-- | Fettfleck |
| 48 | " | W | --- | --- | ++- | Fell glänzt |
| 49 | " | W | --- | --- | --- | |
| 50 | " | M | --- | --- | --- | Fell glänzt |
| 51 | " | M | --- | --- | +-- | --- |
| 52 | " | M | --- | --- | +-- | --- |
| 53 | " | M | --- | --- | +-- | --- |
| 54 | " | M | --- | --- | +-- | Fettfleck |
| 55 | " | W | --- | --- | +-- | --- |
| 56 | " | W | --- | --- | ++- | Fell glänzt |
| 57 | " | W | --- | --- | +-- | " |
| 58 | " | W | --- | --- | +-- | " |
| 59 | " | W | --- | --- | +-- | " |
| 60 | " | W | --- | --- | +-- | --- |
| 61 | " | W | --- | --- | +-- | --- |
| 62 | " | W | --- | --- | --- | Fell glänzt |
| 63 | " | W | --- | --- | --- | " |
| 64 | groß | M | --- | --- | +-- | Fell glänzt |
| 65 | " | W | --- | --- | --- | --- |
| 66 | " | W | --- | --- | --- | --- |
| 67 | " | W | --- | --- | ++- | Fell glänzt/ Fettfleck |
| 68 | " | W | --- | --- | ++-- | --- |
| 69 | " | W | --- | --- | ++- | Fell qlänzt |
| 70 | " | W | --- | --- | +-- | Fettfleck |
| 71 | " | W | --- | --- | +-- | --- |
| 72 | " | M | --- | --- | ++-- | Fell glänzt/ Fettfleck |
| 73 | " | W | --- | --- | +-- | --- |
| 74 | " | W | --- | --- | +-- | Fell glänzt |
| 75 | " | W | --- | --- | +-- | Fettfleck |

| | | | | | | |
|---|---|---|---|---|---|---|
| 56 große Katzen und19 kleine Katzen +++ sehr unangenehm ++- geringer unangenehm +-- kaum vorhanden --- nicht wahrgenommen KGW = Körpergewicht | | | | | | |

Der häufig anfänglich wahrgenommene "knoblauchähnliche Geruch" wurde aufgrund der geringen Intensität nicht als störend empfunden und nur am 1.Tag nach der Applikation wahrgenommen.

### Versuche an Hunden

Tabelle 2 enthält die Ergebnisse zu 11 untersuchten kleinen Hunden mit einem Körpergewicht (KGW) unter 12 kg, denen jeweils 1,5 ml der nachfolgenden Rezeptur "Flozek-Hund" auf die Haut (topisch) aufgetragen wurde:

| | |
|---|---|
| Margosaöl | 16,0 % |
| Isoprpylmyristat | 64,0 % |
| Citronellöl | 10,0 % |
| Lavendelöl | 10,0 % |
| | 100,0 % |

Hunde sind deutlich weniger empfindlich gegenüber ätherischen Ölen als Katzen. Aus diesem Grund wurden in der Rezeptur "Flozek-Hund" die ätherischen Öle Citronella und Lavendelöl zugesetzt.

**Tabelle 2**

| **Kleine Hunde (< 12 kg KGW) - Dosis "Flozek-Hund" 1,5 ml** | | | | | | |
|---|---|---|---|---|---|---|
| **No Hund** | **KGW** | **Geschlecht** | **Allgem. Reaktion** | **Lokale Reaktion** | **Geruch** | **Bemerkung** |
| 1 | klein | M | --- | --- | ++- | --- |
| 2 | " | M | --- | --- | ++- | Fettfleck/ Fell glänzt |
| 3 | " | M | --- | --- | ++- | --- |
| 4 | " | M | --- | --- | +-- | --- |
| 5 | " | W | --- | --- | ++- | Fell glänzt/ Fettfleck |
| 6 | " | W | --- | --- | +-- | --- |
| 7 | " | M | --- | --- | +-- | --- |
| 8 | " | M | --- | --- | ++- | Fell glänzt |
| 9 | " | W | --- | --- | +-- | --- |
| 10 | " | W | --- | --- | +-- | --- |
| 11 | " | W | --- | --- | ++- | Fettfleck |

| | | | | | | |
|---|---|---|---|---|---|---|
| Total 11 kleine Hunde +++ = sehr angenehm ++- = gut +-- = mäßig --- = nicht wahrgenommen | | | | | | |

Der Geruch wurde meist als "Citronelladuft" erkannt und hält ein bis zwei Tage an.

Tabelle 3 enthält die Ergebnisse einer Untersuchung mit 26 großen Hunden mit einem Körpergewicht über 12 kg , denen zweimal eine Menge von 1,5 ml der Rezeptur "Flozek-Hund" aufgetragen wurden.

**Tabelle 3**

| **Große Hunde - Dosis 2 x 1,5 ml "Flozek-Hund"** | | | | | | |
|---|---|---|---|---|---|---|
| **No Hund** | **KGW** | **Geschlecht** | **Allgem. Reaktion** | **Lokale Reaktion** | **Geruch** | **Bemerkung** |
| 1 | > 12 kg | M | --- | --- | +-- | --- |
| 2 | " | W | --- | --- | +-- | --- |
| 3 | " | W | --- | --- | +-- | Fell glänzt |
| 4 | " | M | --- | --- | ++- | Fettfleck |
| 5 | " | M | --- | --- | +-- | Fettfleck |
| 6 | " | M | --- | --- | - | --- |
| 7 | " | M | --- | --- | - | --- |
| 8 | " | M | --- | --- | ++- | Fell glänzt/ Fettfleck |
| 9 | " | W | --- | --- | +-- | --- |
| 10 | " | W | --- | --- | +-- | --- |
| 11 | " | W | --- | --- | +-- | --- |
| 12 | " | W | --- | --- | +-- | Fell glänzt |
| 13 | " | M | --- | --- | +-- | --- |
| 14 | " | M | --- | --- | +-- | Fettfleck |
| 15 | " | M | --- | --- | ++- | Fettfleck |
| 16 | " | M | --- | --- | - | --- |
| 17 | " | M | --- | --- | - | --- |
| 18 | " | M | --- | --- | ++- | Fell glänzt |
| 19 | " | M | --- | --- | - | --- |
| 20 | " | M | --- | --- | +-- | --- |
| 21 | " | W | --- | --- | +-- | --- |
| 22 | " | W | --- | --- | ++- | Fettfleck |
| 23 | " | M | --- | --- | ++- | Fell glänzt |
| 24 | " | W | --- | --- | - | --- |
| 25 | " | W | --- | --- | --- | --- |
| 26 | " | W | --- | --- | ++- | Fettfleck/ Fell glänzt |

| | | | | | | |
|---|---|---|---|---|---|---|
| Total 26 große Hunde +++ = sehr angenehm ++- = gut +-- = mäßig -- = nicht wahrgenommen | | | | | | |

Auch hier wurde der Geruch meist als "Citronelladuft" erkannt und hält ein bis zwei Tage an.

Keines der behandelten Tiere zeigte allgemeine oder lokale Reaktionen nach der Behandlung mit "Flozek-Katze" oder "Flozek-Hund". Es wurde bisweilen ein Fettfleck bis zu drei Tagen nach der Applikation an der Verabreichungsstelle beobachtet, der jedoch nicht störend war. Als positiv wurde häufig eine Verbesserung der Fellkondition bemerkt (lockeres, glänzenderes Aussehen). Trotz der hochkonzentrierten Margosaöl-Formulierung traten weder allgemeine noch lokale Hautreaktionen auf. Der zu erwartende starke Knoblauchgeruch trat überraschenderweise nicht oder nur sehr dezent auf.

In den vorgenannten Studien konnte für Fachleute völlig überraschend zudem festgestellt werden, dass sich eine sehr hohe Wirkstoffkonzentration in den Fettschichten der Oberhaut (Epidermis) anreichert, die wirkungsverstärkende Zusätze überflüssig macht. Auffällig war dabei die erwünschte schnelle Aufnahme der Zusammensetzung in die Haut und die Reduktion des sonst üblichen Knoblauchgeruchs der Haut trotz des durch die hohe Wirstoffkonzentration bedingten hohen Gehaltes flüchtiger, geruchsverursachender Schwefelverbindungen.

Die erfindungsgemäße Zusammensetzung bildet eine wasserunlöslich, ölige Flüssigkeit, die mit Wasser nicht von der Haut entfernbar ist. Dies hat den vorteilhaften Effekt, dass die Zusammensetzung nach dem Auftragen beispielsweise nicht von Regen oder durch Baden unmittelbar wieder abgespült wird.

## Patentansprüche

1. Repellierende Zusammensetzung zur topischen Anwendung auf Lebewesen, enthaltend Margosaöl oder dessen Extrakte, **dadurch gekennzeichnet, dass** die Zusammensetzung wenigstens 20 Gew.% Isopropylmyristat enthält.

2. Zusammensetzung nach Anspruch 1, **dadurch gekennzeichnet, dass** der Anteil an Margosaöl 0,5 bis 80 Gew.-% und der Anteil an Isopropylmyristat 20 bis 99,5 Gew.-% beträgt.

3. Zusammensetzung nach einem der vorhergehenden Ansprüche, **dadurch gekennzeichnet, dass** der Anteil an Margosaöl 5 bis 25 Gew.-% und der Anteil an 1-sopropylmyristat 50 bis 80 Gew.-% beträgt.

4. Zusammensetzung nach einem der vorhergehenden Ansprüche, **dadurch gekennzeichnet, dass** der Anteil an Margosaöl 9 bis 17 Gew.% und der Anteil an Isopropylmyristat 60 bis 70 Gew.-% beträgt.

5. Zusammensetzung nach einem der vorhergehenden Ansprüche, **dadurch gekennzeichnet, dass** das Margosaöl kaltgepresst ist.

6. Zusammensetzung nach einem der vorhergehenden Ansprüche, **dadurch gekennzeichnet, dass** die Zusammensetzung weitere pharmazeutische und/oder kosmetische Additive enthält.

7. Zusammensetzung nach einem der vorhergehenden Ansprüche, **dadurch gekennzeichnet, dass** die Zusammensetzung weitere Pflanzenöle, insbesondere Leinöl, Rapsöl, Nachtkerzenöl und/oder Sonnenblumenöl enthält.

8. Zusammensetzung nach einem der vorhergehenden Ansprüche, **dadurch gekennzeichnet, dass** die Zusammensetzung 16 Gew.-% Margosaöl, 64 Gew.-% Isopropylmyristat, 10 Gew.-% Leinöl und 10 Gew.-% Rapsöl enthält.

9. Zusammensetzung nach einem der vorhergehenden Ansprüche, **dadurch gekennzeichnet, dass** die Zusammensetzung zusätzlich zumindest ein ätherisches Öl, insbesondere Citronellöl und/oder Lavendelöl, enthält.

10. Zusammensetzung nach Anspruch 9, **dadurch gekennzeichnet, dass** die Zusammensetzung 16 Gew.% Margosaöl, 64 Gew.-% Isopropylmyristat, 10 Gew.% Citronellöl und 10 Gew.% Lavendelöl enthält.

11. Zusammensetzung nach einem der vorhergehenden Ansprüche, **dadurch gekennzeichnet, dass** die Lebewesen Haus-, Heim-, Zootiere, und/oder Menschen sind.

12. Verwendung der Zusammensetzung nach einem der vorhergehenden Ansprüche zur Abwehr von Ektoparasiten bei Katzen und/oder Hunden.

## Claims

1. A repellant composition for topical application to living creatures, containing margosa oil or its extracts, **characterised in that** the composition contains at least 20% by weight of isopropyl myristate.

2. The composition according to claim 1, **characterised in that** the proportion of margosa oil amounts to 0.5 to 80% by weight and the proportion of isopropyl myristate amounts to 20 to 99.5% by weight.

3. The composition according to any one of the preceding claims, **characterised in that** the proportion of margosa oil amounts to 5 to 25% by weight and the proportion of isopropyl myristate amounts to 50 to 80% by weight.

4. The composition according to any one of the preceding claims, **characterised in that** the proportion of margosa oil amounts to 9 to 17% by weight and the proportion of isopropyl myristate amounts to 60 to 70% by weight.

5. The composition according to any one of the preceding claims, **characterised in that** the margosa oil is cold-pressed.

6. The composition according to any one of the preceding claims, **characterised in that** the composition contains further pharmaceutical and/or cosmetic additives.

7. The composition according to any one of the preceding claims, **characterised in that** the composition contains further vegetable oils, in particular linseed oil, rapeseed oil, evening primrose oil and/or sunflower oil.

8. The composition according to any one of the preceding claims, **characterised in that** the composition contains 16% by weight of margosa oil, 64% by weight of isopropyl myristate, 10% by weight of linseed oil and 10% by weight of rapeseed oil.

9. The composition according to any one of the preceding claims, **characterised in that** the composition additionally contains at least one essential oil, in particular citronella oil and/or lavender oil.

10. The composition according to claim 9, **characterised in that** the composition contains 16% by weight of margosa oil, 64% by weight of isopropyl myristate, 10% by weight of citronella oil and 10% by weight of lavender oil.

11. The composition according to any one of the preceding claims, **characterised in that** the living creatures are domestic animals, pet animals, zoo animals and/or humans.

12. Use of the composition according to any one of the preceding claims for the prevention of ectoparasites in cats and/or dogs.

## Revendications

1. Composition répulsive pour application topique sur des êtres vivants, contenant l'huile de margosa ou ses extraits, **caractérisée en ce que** la composition contient au moins 20 % en poids de myristate d'isopropyle

2. Composition selon la revendication 1, **caractérisée en ce que** la quantité d'huile de margosa se situe dans l'intervalle allant de 0,5 à 80 % en poids et la quantité de myristate d'isopropyle se situe dans l'intervalle allant de 20 à 99,5 % en poids.

3. Composition selon l'une quelconque des revendications précédentes, **caractérisée en ce que** la quantité d'huile de margosa se situe dans l'intervalle allant de 5 à 25 % en poids et la quantité de myristate d'isopropyle se situe dans l'intervalle allant de 50 à 80 % en poids.

4. Composition selon l'une quelconque des revendications précédentes, **caractérisée en ce que** la quantité d'huile de margosa se situe dans l'intervalle allant de 5 à 25 % en poids et la quantité de myristate d'isopropyle se situe dans l'intervalle allant de 50 à 80 % en poids.

5. Composition selon l'une quelconque des revendications précédentes, **caractérisée en ce que** l'huile de margosa est pressée à froid.

6. Composition selon l'une quelconque des revendications précédentes, **caractérisée en ce que** la composition contient d'autres additifs pharmaceutiques et/ou cosmétiques.

7. Composition selon l'une quelconque des revendications précédentes, **caractérisée en ce que** la composition contient d'autres huiles végétales, en particulier l'huile de lin, l'huile de colza, l'huile d'onagre et/ou l'huile de tournesol.

8. Composition selon l'une quelconque des revendications précédentes, **caractérisée en ce que** la composition contient 16 % en poids d'huile de margosa, 64 % en poids de myristate d'isopropyle, 10 % en poids d'huile de lin et 10 % en poids d'huile de colza.

9. Composition selon l'une quelconque des revendications précédentes, **caractérisée en ce que** la composition contient en outre, au moins une huile éthérée, en particulier l'huile de citronnelle et/ou l'huile de lavande.

10. Composition selon la revendication 9, **caractérisée en ce que** la composition contient 16 % en poids d'huile de margosa, 64 % en poids de myristate d'isopropyle, 10 % en poids d'huile de citronnelle et 10 % en poids d'huile de lavande.

11. Composition selon l'une quelconque des revendications précédentes, **caractérisée en ce que** les êtres vivants sont des animaux domestiques, de zoo et/ou des hommes.

12. Utilisation de la composition selon l'une quelconque des revendications précédentes, pour repousser les ectoparasites chez les chats et les chiens.
